Europäisches Patentamt

European Patent Office

Office européen des brevets

Publication number: **0 289 677**
**A2**

# EUROPEAN PATENT APPLICATION

Application number: **87304423.4**

Int. Cl.⁴ **G01N 15/00**

Date of filing: **19.05.87**

Priority: **27.04.87 US 43223**

Date of publication of application:
**09.11.88 Bulletin 88/45**

Designated Contracting States:
**AT BE CH DE ES FR GB GR IT LI LU NL SE**

Applicant: **Preikschat, Fritz K.**
**16020 Lake Hills Boulevard**
**Bellevue Washington 98008(US)**

Applicant: **Preikschat, Ekhard**
**9048 N.E. 41st Street**
**Bellevue Washington 98004(US)**

Inventor: **Preikschat, Fritz K.**
**16020 Lake Hills Boulevard**
**Bellevue Washington 98008(US)**
Inventor: **Preikschat, Ekhard**
**9048 N.E. 41st Street**
**Bellevue Washington 98004(US)**

Representative: **Arthur, Bryan Edward et al**
**Withers & Rogers 4 Dyer's Buildings Holborn**
**London EC1N 2JT(GB)**

Apparatus and method for particle analysis.

Apparatus for analyzing particles contained in a fluent medium (12). The apparatus includes a body (20) having a window (30), an optical source preferably comprising a laser diode (100) having a small light emitting area (140), and an optical system (102) for focusing the light from the laser diode at a focal spot (84) such that the size of the focal spot is approximately equal to the size of the light emitting area of the laser diode. A photodetector (106) is mounted in the body and detects light backscattered from the focal spot by particles in the fluent medium, and produces an electrical signal that comprises a series of pulses associated with the particles. The electrical signal is input to a detector that counts the pulses and indicates the number of particles in the fluent medium. The detector includes discrimination means for preventing the counting of a pulse that has a rise or fall time above a predetermined threshold, thereby discriminating against particles that are not at the focal spot. Means are provided for measuring the integrated amplitude of the electrical signal, and for varying the distance between the focal spot and the window to maximize such integrated amplitude.

## APPARATUS AND METHOD FOR PARTICLE ANALYSIS

### Related Application

This application is a continuation in part of Serial No. 821,781 filed January 23, 1986, entitled Apparatus and Method for Analyzing Particles in Fluent Medium.

### Field of the Invention

The present invention relates to an apparatus and method for analyzing the size and number of particles in a fluent medium.

### Background of the Invention

There exist many applications in industry and science in which it is required to determine the size and number of particles suspended in a fluent (i.e., liquid or gaseous) medium. These determinations can be very important in many manufacturing processes such as pharmaceuticals, plastics, chemicals, and paper, to name a few examples. Processes such as crystal growth, precipitation, polymerization, gravimetric separation, grinding, etc., must be monitored to control the quality of the product.

The particles in a slurry can range from submicron to millimeters in size, and the relative quantities of the different sizes may be very critical to the quality and performance of the product. For example, a pulp slurry may contain fibers which are about 10-40 microns in size as well as brightener and filler particles (clay) which are mostly less than 4 microns in diameter. The size of coal dust will influence the rate at which its burns. The powders in pills and capsules mut be ground to specific sizes to dispense drugs at optimum rates in the human body.

Ideally, the particle measurements should be made on-line to provide real-time information for process control, and also avoid distortion of the particle size information by removing samples from the process.

In the past, a number of different technologies have been developed for the analysis of particle size, using conventional or laser light sources, ultrasonic beams, cathode ray tubes, and Stoke's law of sedimentation rates. The optical devices which exist today utilize transmission geometries and use various methods to determine size. The method used in most commercially available instruments measures the light intensity scattered at various small forward angles (e.g., Fraunhoffer diffraction patterns) to determine particle size. Another method uses a beam of light scanned across a small chamber through which the fluent medium is forced to flow. A detector is positioned on the opposite side of the flow such that particles cause interruptions of the light received by the detector (Staffin, U.S. Patent No. 3,676,647, and Ogle, U.S. Patent No. 3,858,851). The time that the beam is interrupted is used as a measure of the size of the particle. A variation on this method is devices which force the particles through a sampling chamber at a known velocity and keep the beam stationary (Eisert, U.S. Patent No. 4,110,043).

The major reason for the use of the transmission geometry is that the light scattered by particles in the forward direction (i.e., less than 90° from the original direction of the light beam) is up to 10,000 times more intense than the light scattered in the backwards direction. The limitation of transmission systems is that the particle concentration in the medium must be very low (less than .01 percent by volume) to allow the light to pass through the fluent medium be scattered by a particle, and then pass further through the medium to be detected. Obviously, the use of such methods is impossible at normal process concentrations, which are commonly much greater than one percent. Attempts to use such devices on-line must involve sampling systems which are susceptible to clogging, and dilution systems that cause errors by altering the composition of the sample.

### Summary of the Invention

The amount of light scattered by a fluent medium depends on a number of parameters: the number of particles suspended in the medium, the index of refraction of both the particles and the fluent medium, the size and shape of the particles, and the turbidity and color of the medium. With an unfocused light beam one is able to measure only the sum total of all of these effects, i.e., if one wants to measure one parameter only, e.g., particle size, one has to assume that all of the other parameters remain constant. In this regard, devices which measure particle size on a macroscopic basis by illuminating a large area (Kreikebaum, U.S. Patent No. 4,140,395) to determine the integrated scattering from a suspension of particles will be directly dependent on turbidity and optical density. Such devices can thus only measure the mean particle size, and only if the other variables remain constant.

The present invention provides an optical technique for analyzing individual particles on a microscopic basis suspended in a fluent medium. The term "particles" as used herein includes cellular particles such as bacteria, and in general encompasses any material having optical properties different from that of the suspending fluent medium. The technique of the present invention is based upon the backscattering of light by the particles, and does not require that the fluent medium flow through a sample chamber. Given presently available optical technology, the technique of the present invention is capable of detecting particles as small as 0.5 microns in diameter.

It is important to note that because of the extremely small amounts of light backscattered by individual particles (up to 10,000 times less than at forward angles), the backscattering method has never before been used to measure the particle size of individual particles. Only by the use of a focused beam can the size of individual particles be measured with backscattered (scattering angle greater than 90°) light.

The present invention is based upon the recognition that if the total power of the light source is concentrated onto a diffraction-limited focal spot of comparable size to the smallest particles to be measured (about 1 micron), then sufficient light can be backscattered, even by micron-sized particles, to be measured by a sensitive high-speed detection system. The capability of the present invention to measure the size of individual particles at normal process concentrations through a single optical access port eliminates the limitations of the aforementioned devices.

In one preferred embodiment, an apparatus according to the present invention comprises illumination means, photodetector means and detection means. The illumination means includes an optical source, and an optical system for receiving light from the optical source and focusing the light at a focal spot in the fluent medium. The photodetector detects light from the illumination means that is backscattered by particles at the focal spot, and produces a corresponding electrical signal. The detection means receives the electrical signal, and provides an indication corresponding to the number of particles in the fluent medium.

The optical source preferably comprises a laser diode, and the optical system focuses the light from the laser diode such that the size of the focal spot is approximately equal to the size of the light emitting area of the laser diode. The photodetector means provides a series of pulses respectively associated with particles positioned at the focal spot, and the detection means comprises means for counting such pulses, and means for preventing the counting of a pulse that has a rise time above a predetermined threshold. By means of such rise time discrimination, the system does not count particles that are not at the focal spot. The apparatus of the present invention may also comprise a body to which the illumination means is mounted. Preferably, the body includes a window, and the illumination means positions the focal spot outside the body adjacent to the window and includes means for varying the position of the focal spot in a direction parallel to the window. The detection means may include means for producing an integrated amplitude signal having a magnitude corresponding to the average value of the electrical signal, and the illumination means may include means for adjusting the distance between the focal spot and the window, such that the integrated amplitude signal is at a maximum.

Brief Description of the Drawings

FIGURE 1 is a cross-sectional view of a probe according to the present invention for on-line particle measurement;

FIGURE 2 is a cross-sectional view of the optical assembly of the probe of FIGURE 1;

FIGURE 3 is a cross-sectional view taken along line 3-3 of FIGURE 2;

FIGURE 4 is an electrical schematic diagram of the vibration system;

FIGURE 5 is a graphical view of the beam and focal spot;

FIGURE 6 is a cross-sectional view taken along line 6-6 of FIGURE 5;

FIGURE 7 is a circuit diagram of the preamplifier;

FIGURE 8 is a ciruit diagram of the detection and counting circuit;

FIGURE 9 is a signal diagram corresponding to the circuit of FIGURE 8;

FIGURE 10 is a logic diagram corresponding to the circuit of FIGURE 8;

FIGURE 11 illustrates the use of a nonscanning probe according to the present invention;

FIGURE 12 is a block diagram of an integrated pulse amplitude circuit;

FIGURE 13 illustrates the use of a common optical path for the illumination and backscattered light; and

FIGURE 14 is a cross-sectional view taken along the line 14-14 in FIGURE 13, illustrating the use of a target-shaped detector to simultaneously measure backscattered light from the focal spot and the halo.

Detailed Description of the Drawings

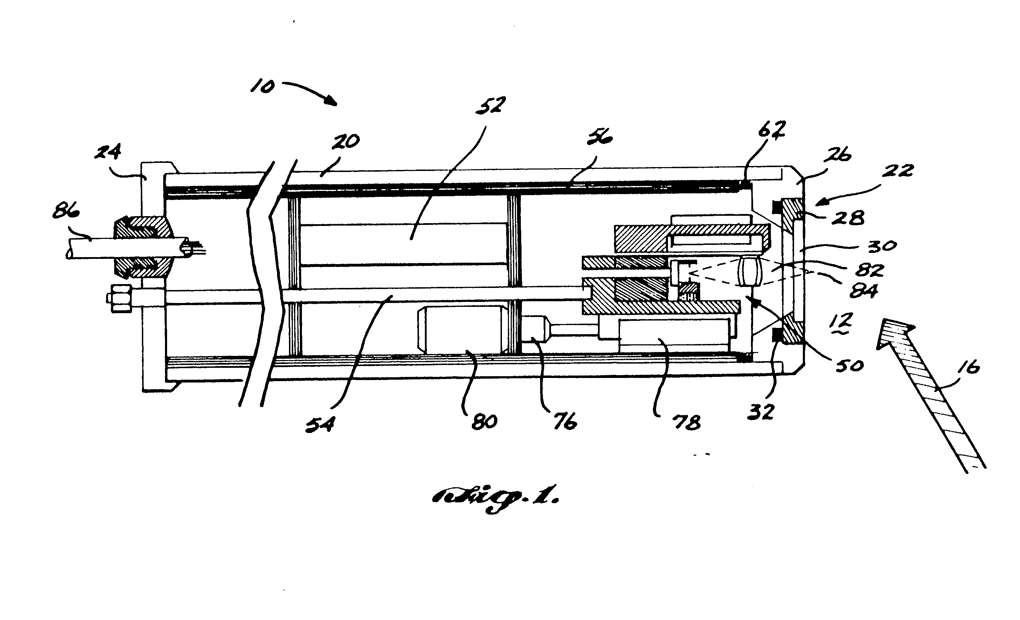

The principles of the present invention are disclosed by way of example by probe 10 shown in FIGURE 1. Probe 10 is adapted for analyzing the sizes and numbers of particles suspended in fluent (e.g. liquid or gaseous) medium 12. Probe 10 comprises cylindrical tube 20 that includes forward end 22 and back end 24. Forward end 22 includes front wall 26 and window carrier 28 in which window 30 is centrally mounted. The window carrier is threaded into front wall 26, and O-ring 32 prevents leakage of the fluent medium into the interior of the probe. The window permits light to pass between the interior of tube 20 and fluent medium 12. For the common case in which the fluent medium flows past the probe, the probe is preferably positioned such that window 30 is oriented at a slight angle to the flow direction (indicated by arrow 16), an arrangement that tends to keep window 30 clean and free of accumulated sediment.

Enclosed within tube 20 are optical assembly 50, electronics package 52, heat pipe 54 and insulating inner tube 56. Inner tube 56 is positioned adjacent the inner wall of tube 20, and is longitudinally secured by means of back end 24 and springs 62 at forward end 22 of the tube. The inner tube serves to thermally insulate the optical assembly and electronics package, for those applications in which the cylindrical sidewalls of mounting tube 20 are inserted into the fluent medium. Optical assembly 50 is mounted within tube 20 adjacent window 30 by bearing slide 78 that permits the optical assembly to be moved along the longitudinal probe axis by stepper motor 80 and positioner 76. The optical assembly generates light beam 82 and focuses the light beam at focal spot 84 that is positioned just outside window 30. As described in greater detail below, the optical assembly also includes means for causing focal spot 84 to vibrate parallel to window 30, and means for detecting light backscattered by particles suspended in the volume of fluent medium 12 at the focal spot.

Heat pipe 54 extends rearwardly from the optical assembly to back end 24 of tube 20. The heat pipe conducts excess heat away from the optical assembly. Electronics package 52 is connected by suitable electrical conductors (not shown) to the optical assembly, and to coaxial cable 86 that extends from back end 24. Coaxial cable 86 serves to connect probe 10 to a suitable detection circuit, as described below.

It is to be understood that the present invention is not limited to the specific arrangement shown in FIGURE 1. For example for some applications, the probe may be contained within the fluent medium. In other applications, the optical assembly may be positioned adjacent a glass container or conduit that contains the fluent medium or through which the fluent medium flows, or the probe may look downward into a reaction vessel in which the fluent medium is either stationary, or is being stirred to produce a circular flow. This versatility is a significant advantage of the persent invention, and derives in significant part from the fact that the present invention uses a backscattering rather than transmission detection method, and does not require the fluent medium to flow through a sample chamber.

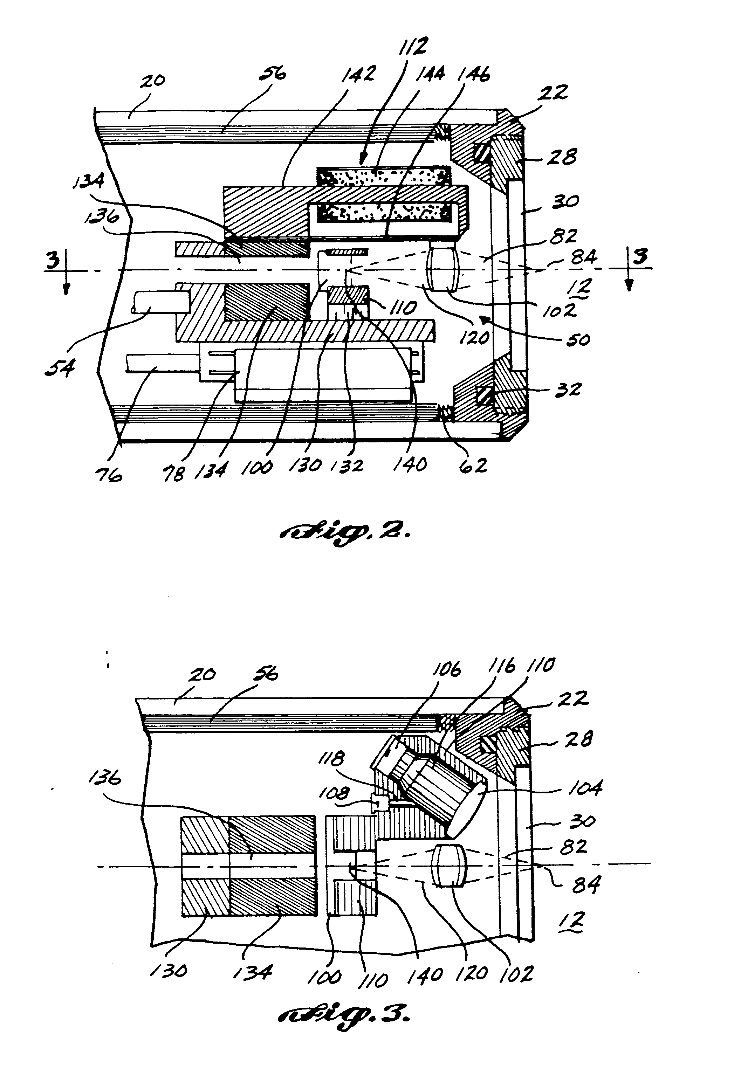

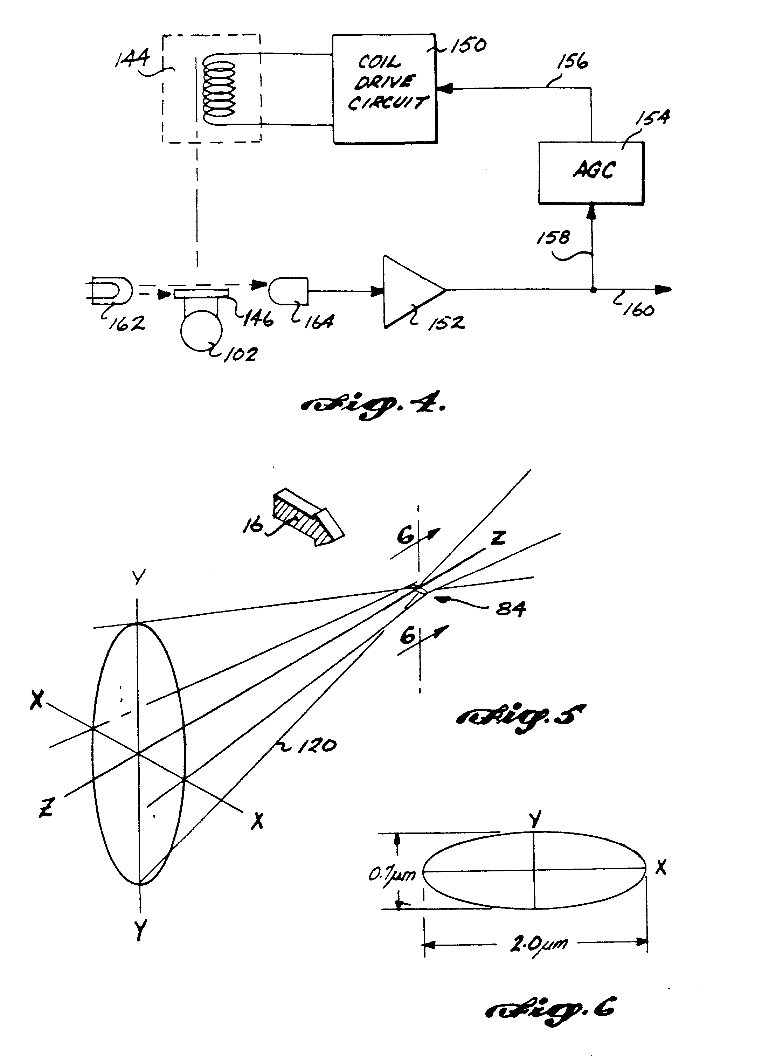

A preferred embodiment of optical assembly 50 is shown in greater detail in FIGURES 2 and 3. The optical assembly includes laser diode 100, lens system 102, lens 104, and photodetectors 106 and 108. Laser diode 100, lens 104 and photodetectors 106 and 108 are supported in aluminum block 110. Lens system 102 is supported by vibration assembly 112, as described more fully below. Block 110 includes passages 116 and 118 through which light passing through lens 104 may reach photodetectors 106 and 108. In operation of the system, laser diode 100 emits beam 120 that is focused by lens system 102 to produce beam 82 focused to focal spot 84. Particles in fluent medium 12 at focal spot 84 backscatter some of the light of beam 82, and a portion of the backscattered light is collected by lens 104 and focused at photodetector 106. Photodetector 108 is an optional element of the optical assembly, and may be included to detect the ambient light level in fluent medium 12 (via lens 104) away from focal spot 84. Lens 104 is also an optional element, and may be omitted if photodetector 106 is sensitive enough to detect unfocused light scattered from focal spot 84.

Laser diode 100 produces monochromatic beam 120 that is generated from radiating area 140 of the laser diode. Typical dimensions for radiating area 140 for currently available laser diodes are 0.7 by 2.0 microns. A suitable component for laser diode 100 is the type ML 4102 laser diode available from Mitsubishi. These very small dimensions are taken advantage of in the present invention by providing lens system 102 that focuses beam 120 to a focal spot 84 having dimensions comparable to the dimensions of radiating area 140, without the use of spatial filtering or complex optics. In order to provide for such focusing, lens system 102 is positioned at a distance of 2f from radiating area 140, where f is the focal length of lens system 102. This arrangement produces an image of the radiating area at focal spot 84 at a distance of 2f from the lens system. Lens system 102 is preferably a triplet lens system, as shown in FIGURES 1-3, in order to eliminate geometric aberration in beam 82. Because beam 120 is monochromatic, chromatic aberration is not a factor. In a preferred embodiment, lens system 102 has a focal length of 7.5 millimeters, and the lens system is positioned 15 millimeters from the radiating area 140, thus producing a focal spot 84 that is spaced 15 millimeters from lens system 102. The position of focal spot 84 with respect to window 30 is discussed in detail below.

The laser diode 100 and block 110 are mounted to base 130 and plastic block 134. If the ambient conditions require, a thermoelectric cooling element 132 may be used between block 110 and base 130 to establish a temperature gradient between these elements so as to maintain the laser diode at a suitable operating temperature. Base 130 is in thermal contact with heat pipe 54 to conduct heat away from the optical assembly. The base is mounted to the movable part of bearing slide 78,which is in turn attached to positioner 76. The fixed part of bearing slide 78 is mounted to inner tube 56. The bearing slide, positioner, and stepper motor provide means to adjust the distance between window 30 and focal spot 84. Block 134 is mounted to base 130 and provides support and vibration isolation for vibration assembly 112. Passage 136 is provided for electrocal connections to laser diode 100.

In a preferred embodiment, lens 104 has a focal length of 8 millimeters and a diameter of 10. millimeters. The lens focuses the light scattered by particles at focal spot 84 onto photodetector 106 that is mounted a distance of 2f (16 millimeters) behind lens 104. Photodetector 106 has a large sensing area (2.5 millimeters in diameter), so that the photodetector will capture light scattered from focal spot 84, even when the focal spot is scanned over a distance of several millimeters. The orientation of lens 104 and photodetector 106 ensures that light reflected from window 30 will not be received b, the photodetector.

Vibration assembly 112 comprises mild steel support 142, coil 144, and leaf spring 146. The entire vibration assembly is mounted to block 134. Energization of coil 144 by a suitable AC signal causes leaf spring 146 and attached lens system 102 to vibrate towards and away from coil 144, in an up and down direction in FIGURE 2. This vibration will cause focal spot 84 to vibrate parallel to window 30, in a direction into and out of the drawing in FIGURE 3. Thus focal spot 84 will sweep through and sequentially illuminate an essentially linear volume of fluent material 12, and reflections from particles in such volume will be detected by photodetector 106 and processed as described below. A suitable vibration frequency for lens system 102 and focal spot 84 is 500 Hertz, with a peak-to-peak displacement of the focal spot of 2 millimeters.

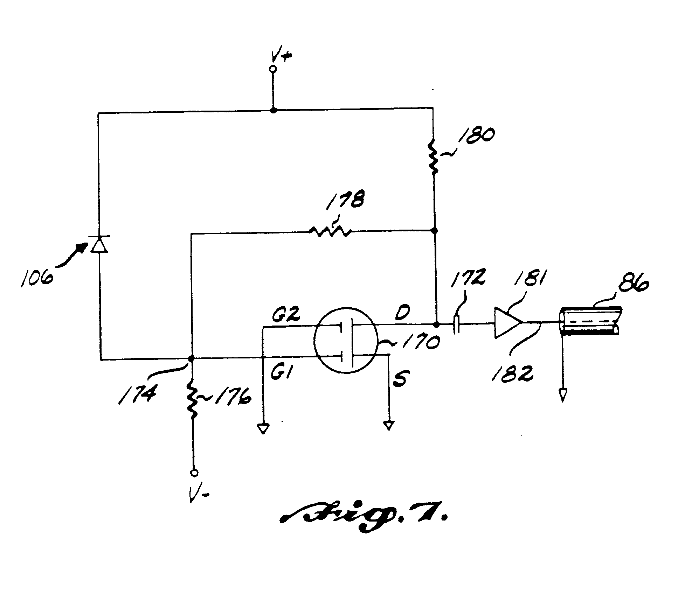

Coil 144 may be driven by the servo system illustrated in FIGURE 4. The servo system comprises coil drive circuit 150, LED 162, photodiode 164, amplifier 152 and AGC (automatic gain control) circuit 154. More or less light from LED 162 is received by photodiode 164 as leaf spring 146 moves down and up, causing the current to amplifier 152 to be reduced or increased. Coil drive circuit 150 energizes coil 144 at an amplitde controlled by AGC circuit 154 via a signal on line 156. AGC circuit 154 adjusts the signal on line 156 such that the AC amplitude of feedback signal 158 is kept constant. The signal on line 158 represents the position of the spring 146 and therefore of lens 102 and focal point 84, and this signal may be sent to the detection circuit, described below, on line 160. It may be desired to use such a signal to limit the analysis of the pulses from photodiode 106 (FIGURE 3) to time periods in which the focal spot is near the center of its range of motion, i.e., to those time periods during which the velocity of the focal spot is constant.

Window 30 may comprise any means by which the light is passed into and out of the fluent medium being analyzed. There may be instances where the process conditions (temperature, pressure, explosive gases) may be such that it is desirable to locate the electronics parts of the optical assembly some distance from the point of measurement. For these applications, alternative optical arrangements may be used, such as fiber optics or periscope optics, as described in greater detail below.

In the past, optical particle analyzers have typically relied on a transmission geometry rather than a backscattering or reflection geometry. In an arrangement using transmission geometry, particles are detected as they pass between the optical source and receiver. On the other hand in a backscattering arrangement the detector is positioned to detect light reflected or backscattered by the particles. One of the advantages of the backscattering arrangement of the present invention is that the measurement is not limited by the diffraction effects that come into play when the particle size is comparable to that of the focal spot. A second advantage of the present invention is that it is not necessary to distort the fluent medium being measured by forcing it to flow through a sample chamber as the particles are analyzed.

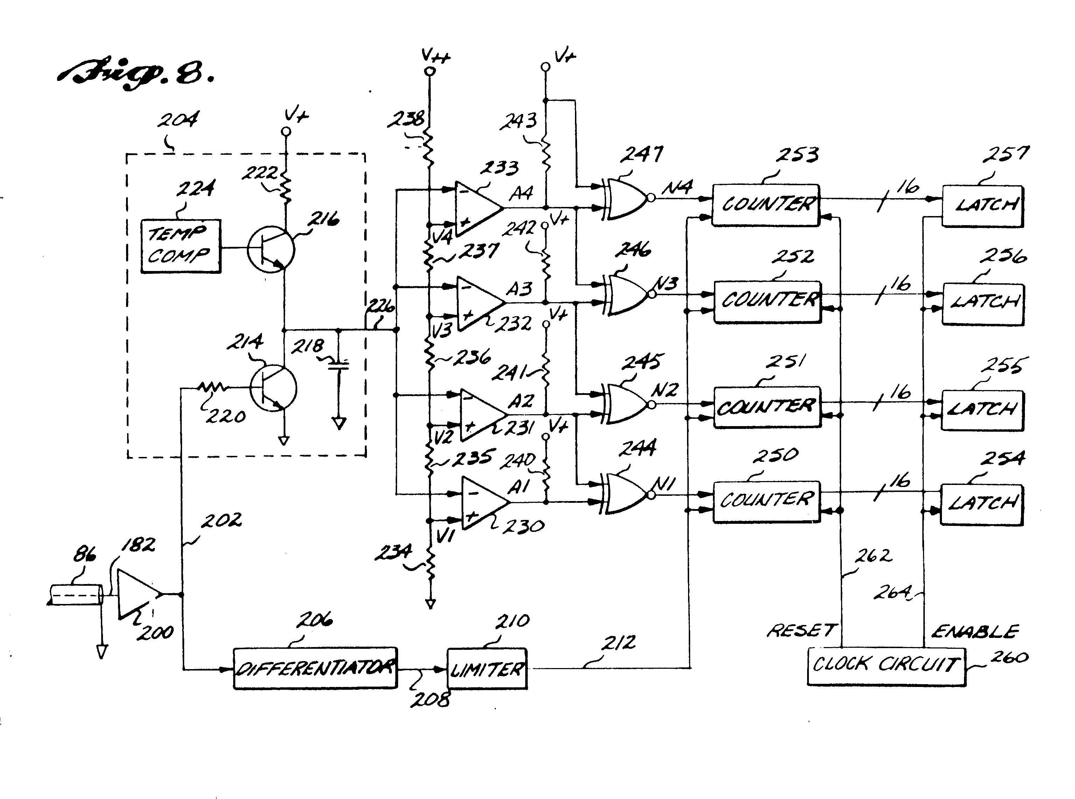

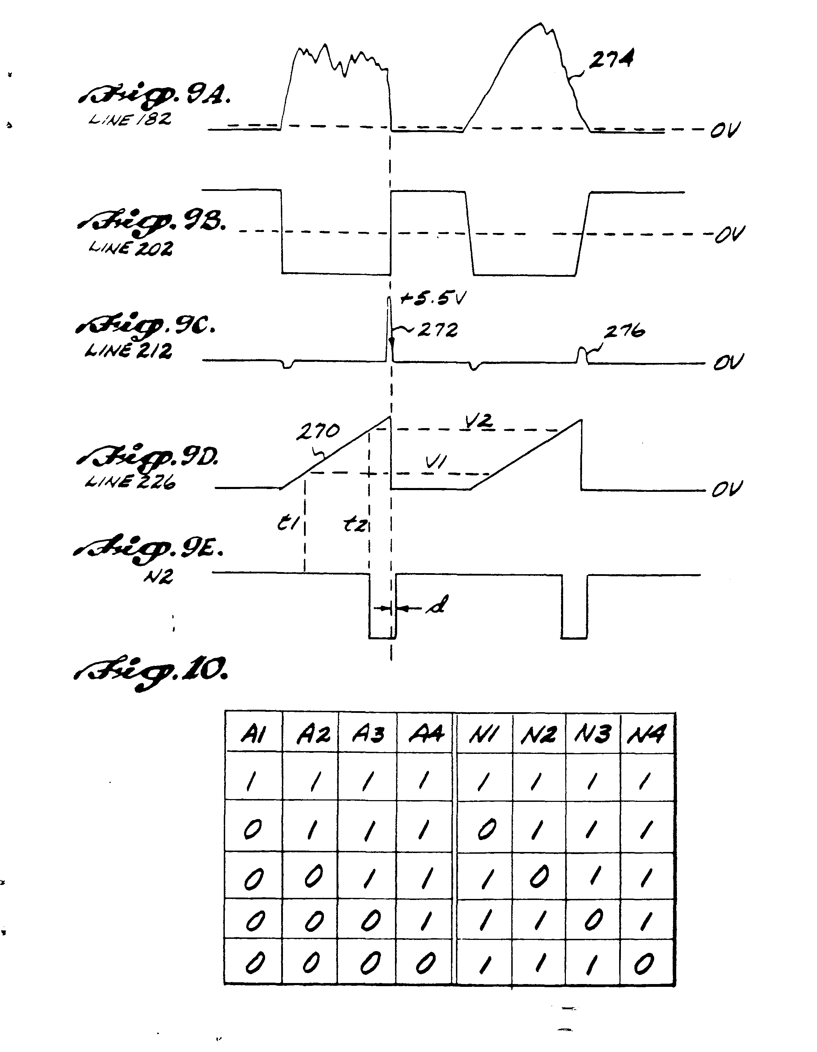

The geometry of beam 82 and focal spot 84 is illustrated in greater detail in FIGURES 5 and 6. In these Figures, a coordinate system is used in which the Z axis defines the longitudinal axis of beam 82, and in which the X and Y axes define the beam cross section. As illustrated, beam 82 has a comparatively large cross section in the Y direction and a comparatively small cross section in the X direction. At focal spot 84, the cross section of the beam is as illustrated in FIGURE 6, with the focal spot having dimensions corresponding to that of light emitting area 140 of laser diode 100, i.e., a diameter along the X axis of approximately 2 microns and a diameter along the Y axis of approximately 0.7 microns. The direction of movement of focal spot 84 due to the vibration of lens system 102 is in the Y direction, i.e., normal to the long cross-sectional axis of the beam and to the flow direction indicated by arrow 16. In the coordinate system shown in FIGURES 5 and 6, lens 104 and photodetector 106 are located in the X-Z plane.

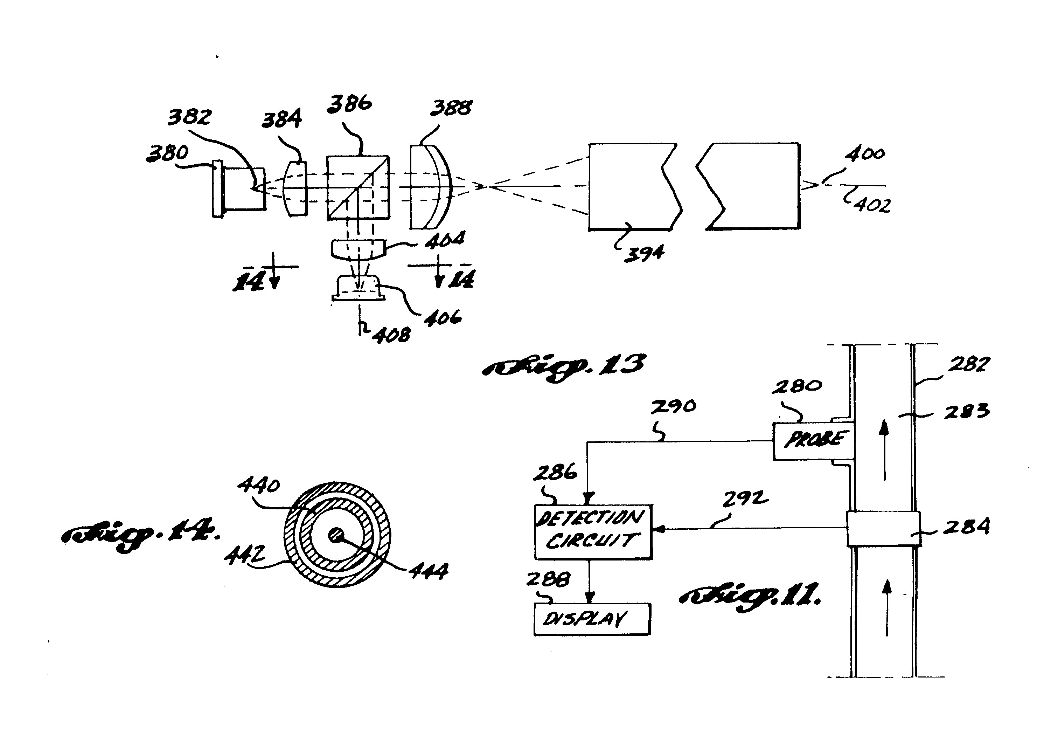

Electronics package 52 (FIGURE 1) contains a conventional drive circuit for laser diode 100, and a preamplifier for amplifying the output signal of photodiode 106. A suitable preamplifier circuit is illustrated in FIGURE 7. The preamplifier comprises photodiode 106 and dual gate gallium arsenide field effect transistor (GaAsFET) 170. GaAsFET 170 includes gates $G_1$ and $G_2$, drain D and source S. The output of the preamplifier is taken from drain D through capacitor 172 and amplifier 181 into signal line 182 of coaxial cable 86. Gate $G_2$ and source S of GaAsFET 170 are connected to ground potential. The cathode of photodiode 106 is connected to positive voltage supply $V_+$, and the anode of the photodiode is connected to gate G, via node 174. Node 174 is connected to negative voltage supply $V_-$ via resistor 176, and to drain D via resistor 178. Drain D is connected to positive voltage supply $V_+$ via resistor 180. In the preamplifier of FIGURE 7, photodiode 106 is reverse biased, the photocurrent through the photodiode being opposite to the conduction current. Without reverse biasing, the response speed of the photodiode would be slow, due to the high capacity at the diode junction. With a reverse bias, the photodiode capacitance is reduced, and the response speed is correspondingly increased. A suitable component for GaAsFET 170 is the MRF 966 N channel GaAsFET available from Motorola.

The grounding of gate $G_2$ and source S results in a high separation between the input and output stages, i.e., very little feedback and high signal-to-noise ratio. The interface circuit comprising resistors 176 and 178 provides a relatively high input impedance, to provide a good impedance match between photodiode 106 and GaAsFET 170. Resistors 176 and 178 are selected such that node 174 is maintained at a potential of approximately -1.8 to -2.2 volts. When the current through photodiode 106 goes up in response to the receipt of illumination, the voltage at gate $G_1$ goes up, and the voltage at drain D goes down. The latter voltage is fed back via resistor 178, and maintains the voltage at gate $G_1$ nearly constant at about minus 2 volts, producing a high signal-to-noise ratio. In some applications, it may be desirable to use two GaAsFETs in series to provide a larger degree of amplification of the photodetector signal.

Photodiode 106 detects light, via lens 104, whenever focal spot 84 sweeps past a particle in fluent medium 12, and/or whenever a particle flows through the focal spot, such that the particle scatters some of the light of beam 82 back towards lens 104. At a velocity of two meters per second, a one micron particle will traverse a one micron focal spot in one microsecond. The corresponding backscattered signal will therefore go from zero (or ambient) to its maximum value in a time period on the order of 0.4 microseconds. The preamplifier must be able to respond to such a pulse, and therefore it should be linear up to about two megahertz. Because this frequency is in the broadcast range, the preamplifier circuit should be shielded and located within probe 10 adjacent to the photodetector. The preamplifier circuit is followed by a conventional operational amplifier 181 with a transistor drive circuit to feed the output signal into a 50 ohm coaxial cable 86. A suitable cable is type RG 58 A/U or equivalent. Using such a cable, the output signal from the preamplifier can be transferred over a distance of 100 feet or more into the input of the detection circuit, which may therefore be located in a separate enclosure.

The present invention takes advantage of the way in which the beam is emitted from the laser diode. Referring to FIGURE 5, the beam spreads at a full angle of about 33 degrees in the Y-Z plane and about 11 degrees in the X-Z plane. The beam is focused to focal spot 84 at the same angle. The beam intensity decreases rapidly at increasing distance from the focal spot 84, because of the large divergence of the beam. Thus, particles which pass through the beam 82 in front of or behind the focal spot 84 will not scatter the full intensity of the beam as rapidly as particles which pass through the focal spot. The rate-of-increase or "rise-time" of the signal at photodiode 106 in FIGURE 3 may therefore be used as a criterion for selecting which particles have passed through the focal spot.

The large solid angle of beam 120 also increases the overall signal-to-noise ratio, because of the diminished beam intensity even at small distances from the focal spot. The large divergence and corresponding convergence angle can be achieved with other laser types only by utilizing bulky and expensive beam expanders and focusing optics. The laser diode can radiate as much or more power as conventional helium-neon lasers (typically 5 milliwatts continuous), and the beam can be expanded and refocused with simple and inexpensive optics, concentrating the full power available at the focal spot. It should be noted that this method can only be used in a backscattering geometry, or else the fluent medium must be forced through a very small passage through which only a few particles could pass at the same time, which would severely limit the usefulness of the device as described above.

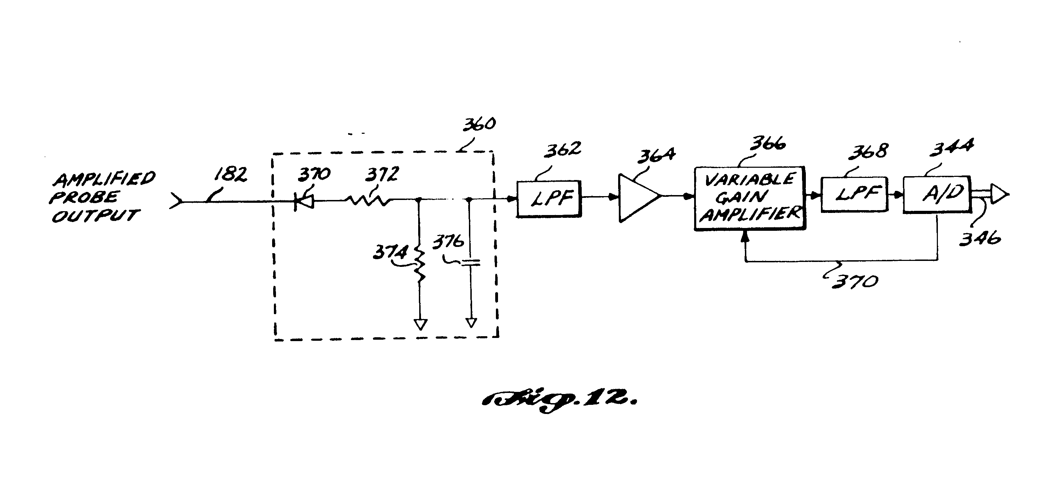

A preferred embodiment of the detection circuit of the present invention is described in FIGURES 8-10. In general, the detection circuit analyzes the pulses produced by the photodiode and preamplifier when the focal spot sweeps past a particle in the fluent medium, or when a particle flows through the focal spot. The illustrated detection circuit classifies the particles into four size categories, counts the particles in each size category, and discriminates against particles that produce pulses with rise times above (i.e., slower than) a predetermined threshold. Any number of size categories may of course be used. The amplified signal from photodetector 106 is received by the detection circuit via line 182 of coaxial cable 86. The signal on line 182 is input to high gain amplifier 200, amplifier 200 preferably having a slew rate on the order of 70 volts/microsecond. The high slew rate of amplifier 200 permits it to track changes in the level of the signal on line 182 without modifying or degrading the signal rise time. The output of amplifier 200 on line 202 is input to ramp circuit 204 and differentiator 206. Typical signals on lines 182 and 202 are illustrated in FIGURES 9A and 9B respectively. Amplifier 200 is biased such that with no input signal, the amplifier output is high, while a positive-going input signal drives the amplifier low. FIGURES 9A and 9B illustrate that amplifier 200 effectively removes noise from the input signal by digitizing the signal, and further illustrates that the rate at wich the signal on line 202 changes state is a function of the rise time of the input signal on line 182. Where the context permits, use of the phrase "rise time" herein should be understood to include both the rise time and the fall time of a signal.

Differentiator 206 produces an output signal on line 208 that has an amplitude corresponding to the first derivative of the signal on line 202. The differentiated signal on line 208 is input to limiter 210. Limiter 210 clips the signal on line 208, so as to limit it to +5.5 volts in a positive direction and -0.5 volts in a negative direction, and produces a clipped and differentiated output signal on line 212 that is illustrated in FIGURE 9C. The negative- going portions of the signal on line 202 produce small negative pulses on line 212 due to the action of limiter 210. However the positive-going portions of the signal on line 202 produce positive pulses on line 212 that up to 5.5 volts have amplitudes proportional to the rise times of the input signal on line 202, and to the fall times of the signal on line 182 (FIGURE 9A). The function of the signal on line 212 is described in greater detail below.

Ramp circuit 204 comprises transistors 214 and 216, capacitor 218, resistors 220 and 222, and temperature compensation circuit 224. Transistors 214 and 216 are connected in series between positive voltage supply V. and ground. The signal on line 202 is input to the base of transistor 214 via resistor 220. The collector of transistor 214 is connected to capacitor 218, and also forms the output of ramp circuit 204 on line 226. When the signal on line 202 is high, transistor 214 conducts and maintains capacitor 218 in a discharged state. The voltage on line 226 is therefore low at this time. However, when the voltage on line 202 goes negative, transistor 214 stops conducting, and capacitor 218 charges via transistor 216 and resistor 222. The resulting ramp signal on line 226 is shown in FIGURE 9D. The rate of charging of capacitor 218 depends upon the voltage provided by temperature compensation circuit 224 at the base of transistor 216. The temperature compensation circuit may therefore be adapted to provide a constant charging rate over the operating temperature of the detection circuit.

The ramp signal on line 226 (FIGURE 9D) and the limited derivative signal on line 212 (FIGURE 9C) are used to control the operation of a counting circuit that comprises operational amplifiers 230- 233, exclusive NOR gates 244-247, counters 250- 253, latches 254-257 and clock circit 260. The ramp signal on line 226 is connected to the inverting input of each of operational amplifiers 230-233. The noninverting inputs of the operational amplifiers are connected to a resistance ladder comprising resistors 234-238 connected between positive voltage supply V++ (e.g., 12 volts) and ground, the resistance ladder providing voltages V1 through V4 as shown in FIGURE 8. The outputs of operational amplifiers 230-233 (A1-A4) are connected to positive voltage supply V+ (e.g., 5 volts) through resistors 240-243 respectively, and to one of the inputs of exclusive NOR gates 244-247 respectively. The second inputs of the exclusive NOR gates are derived as shown from the outputs of the adjacent operational amplifiers, with the second input of exclusive NOR gate 247 being tied to positive voltage supply V+. The outputs of exclusive NOR gates 244-247 (N1-N4) are input to counters 250- 253 respectively. Each counter is a 16-bit counter, and the outputs of the counters may be transferred to latches 254-257 by appropriate reset and enable signals provided by clock circuit 260 on lines 262 and 264 respectively.

The operation of the counting circuit illustrated in FIGURE 8 can be illustrated with reference to the signal diagram of FIGURE 9 and the logic diagram set forth in FIGURE 10. In FIGURE 10, the columns labeled A1-A4 represent the outputs of amplifiers 230-233 respectively, with 1 standing for a high output voltage and 0 standing for a low output voltage. Similarly, the columns labeled N1-N4 correspond to the outputs of exclusive NOR gates 244-247 respectively. Referring to FIGURE 9D, voltage ramp 270 begins when the signal on line 202 (FIGURE 9B) goes low and capacitor 218 beings to charge. Initially, the voltage on line 226 is lower than all of the voltages (V1 through V4) provided at the noninverting inputs of amplifiers 230-233. Thus, the outputs A1-A4 of all amplifiers are high, as reflected in the first row of FIGURE 10. Similarly, each exclusive NOR gate 244-247 has high signals at both of its inputs, and the outputs of all of the exclusive NOR gate N1-N4 are high, again as indicated in the first row of FIGURE 10. As the voltage on line 226 rises, a point is reached on ramp 270, at time $t_1$, at which the voltage on line 226 exceeds the voltage V1 at the noninverting input of amplifier 230. The output of amplifier 230 (A1) therefore goes low, and as a result the output of exclusive NOR gate 244 (N1) also goes low, as illustrated in the second row of FIGURE 10. At time $t_2$, the voltage on line 226 exceeds the voltage V2 at the noninverting input of amplifier 231. The output of amplifier 231 (A2) therefore goes low, forcing the output of exclusive NOR gate 245 (N2) to go low and the output of exclusive NOR gate 244 (N1) to go high, as illustrated in the third row of FIGURE 10. Continued increase of the voltage on line 226 (not illustrated in FIGURE 9D) would result in the signals in rows 4 and 5 of FIGURE 10, when ramp 270 exceeds voltages V3 and V4 respectively.

Voltage ramp 270 continues until the signal on line 202 (FIGURE 9B) goes high, a high signal on line 202 resulting in the rapid discharge of capacitor 218 through transistor 214. The positive-going signal on line 202 also results in a positive voltage pulse on line 212 (FIGURE 9C). The signal on line 212 is connected to the enable input of each of counters 250-253. These counters are adapted to respond to a negative-going enable pulse, provided that the enable pulse voltage was initially greater than 4.5 volts. Thus, in the case of pulse 272 (FIGURE 9C), the pulse height is initially above the 4.5 volt threshold, and as a result, the negative-going edge of pulse 272 enables counters 250-253 to receive the signals supplied by exclusive NOR gates 244-247 respectively. Because signals N1, N3 and N4 are high when enable pulse 272 occurs, counters 250, 252 and 253 do not register any counts in response to the enable pulse. However, a count is registered by counter 251 due to the low N2 signal from exclusive NOR gate 245. The N2 signal is illustrated in FIGURE 9E. Because of the longer signal path between line 202 and the output of exclusive NOR gate 245, the N2 signal remains low for a short period of time d after the occurrence of pulse 272, thus ensuring that counter 251 registers a count.

After counters 250-253 have been permitted to accumulate counts for a predetermined period of time, the contents of the counters may be transferred to latches 254-257 by means of an enable signal on line 264. The counters are then reset to zero by a reset signal on line 262, and the process is repeated. Thus at the time that the counter contents are transferred, each latch contains a number corresponding to the number of particles counted in a given size range, the size ranges being defined by voltages V1-V4. The latches may be used to drive display devices, or to transfer the count data to a data storage system or to a process control system.

An important aspect of the present invention is that particles that pass through the light beam too far from the focal spot are not counted. Discrimination against such particles is provided by requiring that enable pulse 272 exceed a predetermined level, for example 2.5 volts. FIGURE 9A illustrates pulse 274 resulting from a particle that partially occluded the light beam but that was not contained in the volume through which the focal spot was scanned. As illustrated in FIGURE 9C, the slow rise time of pulse 274 results in enable pulse 276 that has an amplitude less than the 2.5 volt threshold. Pulse 274 is therefore ineffective to enable counters 250-253. Consequently, no count is registered for pulse 274, and the required screening of out of focus particles is accomplished. It is important to note that the high gain of amplifier 200 coupled with the rise time discrimination provided by differentiator 206 provides a detection circuit that does not depend upon the amplitude of the pulses from the photodiode and preamplifier, but rather on their rise times. The rise time sensitivity of the detection circuit is determined by the time constant of differentiator 206. If the differentiator is implemented by a simple RC circuit, suitable values for the resistor and capacitor are 33 picofarads and 2.2 kilohms, respectively, giving a time constant of 73 nanoseconds. If amplifier 200 has a slew rate of 70 volts/microseconds, the amplifier output will go from +10 volts to -10 volts in about 285 nanoseconds, a change that is comparable to charging the differentiator capacitor to 5 volts in 75 nanoseconds. Thus, the detection circuit counts only those pulses that are fast enough to drive amplifier 200 near its maximum slew rate.

It should be noted that the system described above may be modified to use any number of size categories, and that digital signal processing methods may be used to obtain the rise-time and pulse length values. High-speed microprocessing circuits may be used to provide distinct length, amplitude and rise time values for each pulse received, allowing a continuous distribution of all particle sizes to be obtained, rather than a fixed number of size categories.

For some applications, the fluent medium containing the particles to be analyzed will flow at a continuous rate past the point at which the particle sizes and concentrations are to be measured. In such a case, it may not be necessary to scan the focal spot, and particle analysis can proceed by means of a fixed probe and focal spot past which the fluent medium flows. In some cases, the flow rate of the fluent medium will be fixed, in which case such fixed rate can be taken into account in the calibration of the detection circuit. However, when the flow rate of the fluent medium is variable, and where it is desired to determine particle size as well as particle count, then it will generally be necessary to either utilize a flow regulation device to produce a fixed rate of flow past the probe, or to measure the flow rate and take the measured flow rate into account in the detection circuit. The latter situation is illustrated in FIGURE 11. In this Figure, probe 280 is used to measure particle sizes and numbers in pipe 282 through which fluent medium 283 is flowing in the direction indicated by the arrows. Flow meter 284 is interposed in pipe 282, and produces a flow rate signal on line 292. The system shown in FIGURE 11 further includes detection circuit 286 and display 288. The detection circuit receives the signal provided by probe 280 on line 290, and is also connected to receive the flow signal on line 292. The detection circuit may be similar to the circuit shown in FIGURE 8. In such a case, the detection circuit would utilize the flow signal on line 292 to alter the time constant of differentiator 206, and also to modify the slope of the ramp produced by ramp circuit 204. The resulting particle sizes and counts could then be displayed by display 288.

In the case where it is not desired to utilize a flow meter, a mechanism may be utilized to produce a constant flow of the fluent medium past the probe. In the case of powdered materials carried in a gas, the mechanism may simply comprise a venturi pipe adjacent to the optical window, with air driven dry-air jets that blow the particles past the window. In general, where focal spot scanning is not used, it will be necessary that the flow velocity of the fluent medium be high enough to provide the required counting rates.

The present invention is capable of producing accurate measurements of particle size over a very wide range of particle concentrations, i.e., from .01 percent to greater than 20 percent by volume. However, the distance from the window to the focal spot is important to the accuracy of the system. If the focal spot is too far inside the fluent medium, then the particles between the window and the spot may collectively scatter too much of the beam, leaving little of the light energy to be focused (as in the transmission geometries). If the focal point is too close to the window, then the probability of the beam illuminating a particle becomes small, slowing the acquisition of data to unacceptable levels.

It has been discovered that the optimum accuracy in the counting and sizing of particles is achieved by adjusting the distance from the window to the focal spot such that the integrated amplitude is maximized. The integrated amplitude is the average amplitude of the signal on line 182 of FIGURE 8. Thus, with reference to FIGURE 9A, the integrated amplitude is the integrated average, over all of the pulses appearing on line 182, of the pulse amplitude times the pulse width. The signal on line 182 can be sent to a suitable integrated amplitude circuit, described below, which can produce an indication or signal proportional to the integrated amplitude. Referring to FIGURE 1, such a signal can be used with a suitable servo loop to control the stepper motor 80/positioner 76 to automatically adjust the position of the optical assembly 50, and thus the distance between the focal spot and the window so that the maximum integrated amplitude is achieved. Alternatively, an indication of the integrated amplitude may be used to manually adjust the position of the focal spot.

A suitable embodiment for an integrated amplitude circuit is shown in FIGURE 12. The integrated amplitude circuit comprises interface circuit 360, low pass filter 362, amplifier 364, variable gain amplifier 366 and low pass filter 368. The preamplified probe output signal on line 182 (FIGURE 8) is conveyed to interface circuit 360. The interface circuit comprises diode 370, resistors 372 and 374, and capacitor 376. The interface circuit converts the probe output signal into a properly balanced DC output. The signal produced by the interface circuit is filtered by low pass filter 362, amplified by amplifier 364, and then input to variable gain amplifier 366. The output of the variable gain amplifier passes through a second low pass filter 368, and is then input to A/D 344. A/D 344 controls the gain of amplifier 366 via a feedback signal on line 370, in a manner well known to those skilled in the art, in order to maximize dynamic range. The digital integrated amplitude signal produced by A/D 344 on bus 346 is then input to a servo system, as described above, to control the position of the focal spot.

In many applications there will be a "halo" of light surrounding the focal spot in the fluent medium, caused by secondary and higher order light scattering from particles in the vicinity of the focal spot. Referring to the Lambert-Beer law of light propagation through a fluent medium with suspended particles, the light intensity $I_t$ at a distance x from the light source is given by:

$$I_t = I_o e^{-nCkx} \qquad (1)$$

where $I_o$ is the intensity at the source, n is the number of particles, C is the optical cross section of the particles, and k is the absorbtion coefficient. In the case of backscattered light, the distance x from the source will be different for off-axis detection points, i.e., for light from the halo surrounding the focal spot. The light received by such detectors is then proportional to the product nCk in equation (1) above. Since k is constant for a given material and C is directly related to the size of the particles, n can be determined and used as a measure of volumetric concentration. Photodiode 108 in FIGURE 3 measures the light scattered from areas not included in focal spot 84, and so measures light from the "halo" that has travelled a different distance from the source as has the light received by photodiode 106 from the focal spot. Thus the ratio of the signals from 108 and 106 is a measure of the number n of the particles in the fluent medium.

FIGURE 13 illustrates an embodiment in which a common optical path is used for the illumination and backscattered light. The embodiment of FIGURE 13 includes laser diode 380, collimating lens 384, beamsplitter 386 and focusing lens 388. The beam emitted from light emitting area 382 of laser diode 380 is collimated by lens 384, passes through beamsplitter 386 and lens 388 into optical conveyance system 394 that may comprise a periscope (optical relay) system, or a fiber optic system. The optical conveyance system projects the illumination light along axis 402, and focuses the illumination light at focal spot 400 in the fluent medium. Light is backscattered from focal spot 400, passes through optical conveyance system 394 to the beamsplitter, and is reflected by the beamsplitter towards lens 404 that focuses the backscattered light onto photodiode 406. It will be noted that the focal plane perpendicular to axis 402 at focal spot 400 will be mapped onto a plane at photodetector 406 normal to the axis 408 of the light beam traveling from the beamsplitter to the photodetector. However, the illumination at photodetector 406 will remain stationary, even as focal point 400 is scanned. In one preferred arrangement, photodetector 406 is a multisectored photodetector adapted to measure not only the scattered light at the center of the beam, but also the off-axis light that is the result of the halo effect. The configuration of the multisectored photodetector can vary, depending upon what additional information is to be collected. One suitable configuration is shown in FIGURE 14. Photodetector 406 consists of two concentric photodetector rings 440 and 442 surrounding centrally located high-speed detector 444 onto which the center of the beam (i.e., the light back-scattered by the focal spot) is focused. Centrally located detector 444 is small enough in size to have a high-speed response time, but large enough to capture all of the scattered light from the focal spot 400. The signal from this photodetector is used to analyze the light scattered from individual particles, as described above. Photodetector rings 440 and 442 are larger in size, and pick up light scattered from portions of the halo. The signals produced by these photodetectors are thus largely an average voltage or DC level, and the ratio of the signal produced by photodetector ring 440 to the signal produced by photodetector ring 442 can be used to measure the concentration of particles in the fluent medium.

While the preferred embodiments of the invention have been illustrated and described, it is to be understood that variations will be apparent to those skilled in the art. The present invention is therefore not limited to the specified embodiments, and the scope and the spirit of the invention are instead to be determined by reference to the following claims.

## Claims

1. An apparatus for analyzing particles contained in a fluent medium by analyzing light backscattered by such particles, the apparatus comprising:

illumination means comprising an optical source and an optical system for receiving light from the optical source and focusing the light at a focal spot in the fluent medium;

photodetector means for detecting light from the illumination means that is backscattered by particles at the focal spot, and for producing a corresponding electrical signal; and

detection means connected to receive the electrical signal and to provide an indication corresponding to the number of particles in the fluent medium.

2. The method of Claim 1, wherein the optical source comprises a laser diode having a light emitting area, wherein the optical system focuses the light from the laser diode such that the size of the focal spot is approximately equal to the size of the light emitting area.

3. The method of Claim 1, wherein the photodetector means includes means for detecting pulses of light resulting from the backscattering of light by particles in the focal spot and for producing an electric signal comprising a corresponding series of electrical pulses, and wherein the detection means comprises counting means for counting the electrical pulses and discrimination means for preventing the counting of an electrical pulse that has a rise time above a predetermined threshold.

4. The method of Claim 1, further comprising a body to which the illumination means is mounted, the body including a window, and wherein the illumination means positions the focal spot outside the body adjacent to the window.

5. The method of Claim 4, wherein the illumination means includes means for varying the position of the focal spot with respect to the body in a direction parallel to the window.

6. The apparatus of Claim 4, wherein the detection means includes means for producing an integrated amplitude signal having a magnitude corresponding to the average amplitude of the electrical signal, and wherein the illumination means includes means for adjusting the distance between the focal spot and the window such that the integrated amplitude signal is at a maximum.

7. The apparatus of Claim 1, further comprising a body to which the illumination means and photodetector means are mounted, the illumination means comprising means for varying the position of the focal spot with respect to the body, whereby the focal spot is scanned through the fluent medium.

8. The method of Claim 1, wherein the optical system comprises a beamsplitter and optical conveyance means for conveying light along a path from the beamsplitter and for focusing the light at the focal spot, and for receiving light backscattered at the focal spot and returning the backscattered light to the beamsplitter, the photodetector means being positioned to receive backscattered light from the beamsplitter.

9. The method of Claim 1, wherein the photodetector means includes means for detecting pulses of light resulting from the backscattering of light by particles in the focal spot and for producing an electric signal comprising a corresponding series of electrical pulses, and wherein the detection means includes means for separately counting the electrical pulses in a plurality of ranges of pulse length, whereby the numbers of particles in a plurality of size ranges are determined.

10. The method of Claim 9, wherein the detection means comprises a plurality of first counters, each first counter being associated with a particular range of pulse lengths, means responsive to each electrical pulse for determining the pulse length and providing a signal to a selected first counter in whose range the pulse length falls, and enable means for providing an enable signal operative to enable the selected first counter to increment its count, the enable means providing the enable signal if the rise or fall time of a pulse is below a predetermined threshold.

11. A method for analyzing particles contained in a fluent medium, the method comprising:
producing illumination light;
focusing the illumination light at a focal spot in the fluent medium;
detecting illumination light that is backscattered by particles at the focal spot, and producing a corresponding electrical signal; and
processing the electrical signal to produce an indication corresponding to the number of particles in the fluent medium.

12. The method of Claim 11, wherein the illumination light is focused to a focal spot having a size approximately equal to the size of the source of illumination light.

13. The method of Claim 11, wherein the step of detecting light includes detecting pulses of light resulting from the backscattering of light by particles in the focal spot and producing an electric signal comprising a corresponding series of electrical pulses, wherein the processing step includes counting the electrical pulses, and preventing the counting of an electrical pulse that has a rise time above a predetermined threshold.

14. The method of Claim 13, wherein the processing step includes producing an integrated amplitude signal having a magnitude corresponding to the average amplitude of the electrical signal, and wherein the method comprises the further step of varying the position of the focal spot along a longitudinal axis of the illumination light such that the integrated amplitude signal is at a maximum.

15. The method of Claim 11, wherein the step of detecting light includes detecting pulses of light resulting from the backscattering of light by particles in the focal spot and producing an electric signal comprising a corresponding series of electrical pulses, and wherein the processing step comprises separately counting the electrical pulses in a plurality of ranges of pulse length, to thereby determine the number of particles in a plurality of size ranges.

16. The method of Claim 11, comprising the further step of varying the position of the focal spot to scan the focal spot through the fluent medium.

*Fig. 1.*

0 289 677

0 289 677

Fig. 2.

Fig. 3.

*Fig. 4.*

*Fig. 5*

*Fig. 6*

*Fig. 7.*

Fig. 8.

0 289 677

*Fig. 9A.*
LINE 182

274

0V

*Fig. 9B.*
LINE 202

0V

*Fig. 9C.*
LINE 212

+5.5V

~272

276

0V

*Fig. 9D.*
LINE 226

270

V2

V1

0V

t1  t2

*Fig. 9E.*
N2

d

*Fig. 10.*

| A1 | A2 | A3 | A4 | N1 | N2 | N3 | N4 |
|----|----|----|----|----|----|----|----|
| 1  | 1  | 1  | 1  | 1  | 1  | 1  | 1  |
| 0  | 1  | 1  | 1  | 0  | 1  | 1  | 1  |
| 0  | 0  | 1  | 1  | 1  | 0  | 1  | 1  |
| 0  | 0  | 0  | 1  | 1  | 1  | 0  | 1  |
| 0  | 0  | 0  | 0  | 1  | 1  | 1  | 0  |

380 382 384 386 388 400

402

394 404

14 14

408 406

*Fig.13*

282

280 283

290 PROBE

286

292 284

DETECTION
CIRCUIT

440 288

*Fig.14.* 442 DISPLAY *Fig.11.*

444

0 289 677

AMPLIFIED PROBE OUTPUT 182 370 372 360 374 376 362 LPF 364 366 VARIABLE GAIN AMPLIFIER 368 LPF 344 A/D 346 370

*Fig.12.*